# EUROPEAN PATENT SPECIFICATION

(11) **EP 3 570 577 B1**
(45) Date of publication and mention of the grant of the patent: **07.04.2021**
(21) Application number: 18817360.3
(22) Date of filing: 18.06.2018
(51) Int. Cl.: H04W 12/00, H04W 12/04, H04W 88/08, H04W 76/27, H04L 9/08, H04L 29/06, H04W 88/12

(54) **METHOD AND APPARATUS FOR SUPPORTING SECURITY FOR SEPARATION OF CU-CP AND CU-UP IN WIRELESS COMMUNICATION SYSTEM**
VERFAHREN UND VORRICHTUNG ZUR UNTERSTÜTZUNG DER SICHERHEIT ZUR TRENNUNG VON CU-CP UND CU-UP IN EINEM DRAHTLOSKOMMUNIKATIONSSYSTEM
PROCÉDÉ ET APPAREIL POUR PRENDRE EN CHARGE LA SÉCURITÉ DE SÉPARATION D'UN CP DE CU ET D'UN UP DE CU DANS UN SYSTÈME DE COMMUNICATION SANS FIL

(30) Priority: 17.06.2017 US 201762521383 P
(43) Date of publication of application: 20.11.2019
(73) Proprietor: LG Electronics Inc., Seoul 07336 (KR)
(72) Inventor: XU, Jian, Seoul 06772 (KR); BYUN, Daewook, Seoul 06772 (KR); KIM, Seokjung, Seoul 06772 (KR)
(74) Representative: Mooser, Sebastian Thomas
(86) International application number: PCT/KR2018/006854
(87) International publication number: WO 2018/231031

(56) References cited:
- KR-A- 20080 085 694
- KR-A- 20160 054 483
- KR-A- 20170 039 247
- US-A1- 2016 044 506
- US-A1- 2017 005 795
- ERICSSON: "Separation of CP and UP", 3GPP DRAFT; RP-171215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. West Palm Beach, Florida, USA; 20170605 - 20170608 5 June 2017 (2017-06-05), XP051280702, Retrieved from the Internet: URL:http://www.3gpp.org/ftp/Meetings_3GPP_ SYNC/RAN/Docs/ [retrieved on 2017-06-05]
- LG ELECTRONICS INC: "Issues on Security for CU-CP and CU-UP Separation", 3GPP DRAFT; R3-172480 ISSUES ON SECURITY FOR CU-CP AND CU-UP SEPARATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG3, no. Qingdao, China; 20170627 - 20170629 20 June 2017 (2017-06-20), XP051308112, Retrieved from the Internet: URL:http://www.3gpp.org/ftp/tsg_ran/WG3_Iu /TSGR3_AHGs/R3_AH_NR_1706/Docs/ [retrieved on 2017-06-20]
- ERICSSON et al.: "Separation of CP and UP", R3-171725, 3GPP TSG-RAN WG3 #96, 6 May 2017 (2017-05-06), pages 1-3, XP051265620, Hangzhou, China
- KIM, JU HEE et al.: "5G Network Technology from the Telecommunications Carriers Perspective", OSIA S& TR Journal, Infrastructure Research Institute, KT Convergence Technology Institute, vol. 29, no. 4, December 2016 (2016-12), pages 1-17, XP009515775, ISSN: 1738-9887
- ERICSSON: "Security for CP-UP separation", 3GPP DRAFT; R3-174838 SECURITY FOR CP-UP SEPARATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, NV, U.S.; 20171127 - 20171201 18 November 2017 (2017-11-18), XP051373558, Retrieved from the Internet: URL:http://www.3gpp.org/ftp/tsg%5Fran/WG3% 5FIu/TSGR3%5F98/Docs/ [retrieved on 2017-11-18]
- LG ELECTRONICS ET AL: "Procedures for Security Support in CU-CP UP Separation", 3GPP DRAFT; R3-182982 PROCEDURES FOR SECURITY SUPPORT IN CU-CP UP SEPARATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG3, no. Busan, Korea; 20180521 - 20180525 11 May 2018 (2018-05-11), XP051527158, Retrieved from the Internet: URL:http://www.3gpp.org/ftp/tsg%5Fran/WG3% 5FIu/TSGR3%5F100/Docs/R3%2D182982%2Ezip [retrieved on 2018-05-11]

## Description

### BACKGROUND OF THE INVENTION

### Field of the Invention

The present invention relates to wireless communication and, more particularly, to a method and an apparatus for supporting security when a central unit (CU)-control plane (CP) and a CU-user plane (UP) are separated in a new radio access technology (NR) system.

### Related Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Mobile carriers are providing more services in service areas which get smaller. This small service area may be specified as a small cell. However, it may be an issue to communicate travelling between these small service areas, in which all of capacity, coverage, and interference need to be considered. Accordingly, it has been proposed to serve small cells through a centralized radio access network (C-RAN). One requirement for implementing the C-RAN is a new concept called fronthaul.

The document "Separation of CP and UP" by Ericsson, 3GPP DRAFT; RP-171215, 2017-06-05, discloses that CU-CP shall configure security keys in CU-UP for RAN security keys in the CU-UP for RAN security activation and configuration.

US 2017/005795 A1 discloses that a MeNB generates a user plane key and sends the user plane key to a SeNB.

US 2016/044506 A1 discloses that a unique non-repetitive security base key associated with the second eNB is generated using a freshness parameter and security key associated with the first eNB.

### SUMMARY OF THE INVENTION

The invention is set out in the independent claims. Preferred embodiments of the invention are outlined in the dependent claims.

In NR, it has been introduced to divide a base station into a central unit (CU) and a distributed unit (DU) in order to solve the problem of fronthaul. In addition, it has been introduced to divide the CU into a CU-control plane (CP) and a CU-user plane (UP) in order to realize the concept of cloud RAN. However, when the CU is divided into the CU-CP and the CU-UP, the potential issue of security may arise.

In an aspect, a method for supporting, by a central unit (CU)-control plane (CP) of a gNB, security of a CU-user plane (CU-UP) of the gNB in a wireless communication system is provided. The method includes selecting an encryption algorithm, generating a user plane security key for the CU-UP based on the encryption algorithm, and transmitting the user plane security key for the CU-UP to the CU-UP.

In another aspect, a method for supporting, by a central unit (CU)-user plane (UP) of a gNB, security in a wireless communication system is provided. The method includes receiving a user plane security key for the CU-UP from a CU-control plane (CP) of the gNB, and applying the received user plane security key,

The CU-CP is a logical node constituting the gNB that hosts a radio resource control (RRC) protocol and a packet data convergence protocol (PDCP)-C protocol, and the CU-UP is a logical node constituting the gNB that hosts a PDCP-U protocol.

When a CU-CP is separated from a CU-UP, the CU-UP can process a data packet through security. Further, the CU-UP can successively process data packets through updated security.

### BRIEF DESCRIPTION OF THE DRAWINGS

FIG. 1 shows an NG-RAN architecture.
FIG. 2 shows a NG user plane protocol stack in a NR system.
FIG. 3 shows a NG control plane protocol stack in a NR system.
FIG. 4 shows an Xn user plane protocol stack in a NR system.
FIG. 5 shows an Xn control plane protocol stack in a NR system.
FIG. 6 shows an example of the overall architecture of an NG-RAN.
FIG. 7 shows logical nodes (CU-C, CU-U, and DU) in a logical gNB/en-gNB.
FIG. 8 shows a deployment scenario for a gNB.
FIG. 9 shows the protocol structure of an E1 interface defined between a CU-CP and a CU-UP.
FIG. 10 illustrates a method for supporting security of the CU-UP according to embodiment 1-1 of the present invention.
FIG. 11 illustrates a method for supporting security of the CU-UP according to embodiment 1-2 of the present invention.
FIG. 12 illustrates a method for supporting security of the CU-UP according to embodiment 1-3 of the present invention.
FIG. 13 illustrates a method of updating a security key when a PDCP count wraps around in the CU-UP according to embodiment 2-1 of the present invention.
FIG. 14 illustrates a method of updating a security key when a PDCP count wraps around in the CU-UP according to embodiment 2-2 of the present invention.
FIG. 15 illustrates a method of updating a security key when a PDCP count wraps around in the CU-UP according to embodiment 2-3 of the present invention.
FIG. 16 illustrates a method in which a CU-CP of a gNB supports security of a CU-UP according to an embodiment of the present invention.

### DESCRIPTION OF EXEMPLARY EMBODIMENTS

The technical features described below may be used by a communication standard by the 3rd generation partnership project (3GPP) standardization organization, a communication standard by the institute of electrical and electronics engineers (IEEE), etc. For example, the communication standards by the 3GPP standardization organization include long-term evolution (LTE) and/or evolution of LTE systems. The evolution of LTE systems includes LTE-advanced (LTE-A), LTE-A Pro, and/or 5G new radio (NR). The communication standard by the IEEE standardization organization includes a wireless local area network (WLAN) system such as IEEE 802.11a/b/g/n/ac/ax. The above system uses various multiple access technologies such as orthogonal frequency division multiple access (OFDMA) and/or single carrier frequency division multiple access (SC-FDMA) for downlink (DL) and/or uplink (DL). For example, only OFDMA may be used for DL and only SC-FDMA may be used for UL. Alternatively, OFDMA and SC-FDMA may be used for DL and/or UL.

A 5G system is a 3GPP system including a 5G access network (AN), a 5G core network (CN), and a user equipment (UE). The 5G AN is an access network including a non-3GPP access network connected to a CN and/or a new-generation radio access network (NG-RAN).

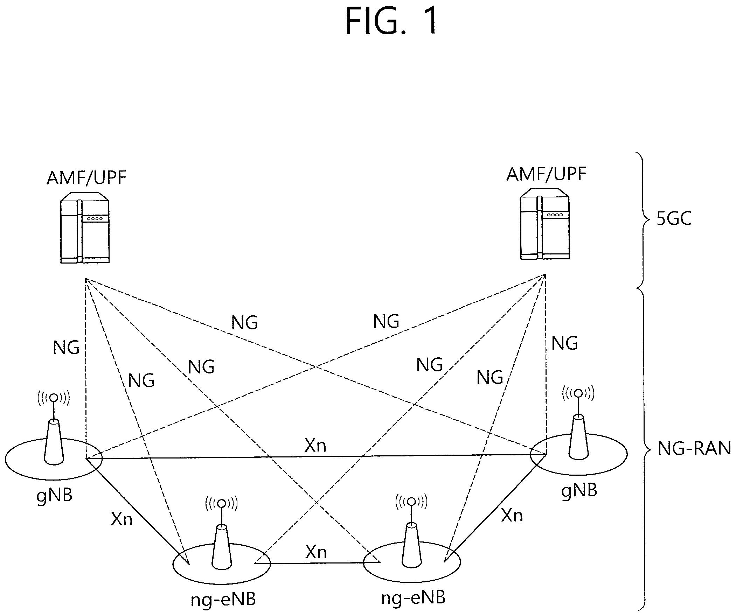

FIG. 1 shows an NG-RAN architecture. Referring to FIG. 1, the NG-RAN includes at least one NG-RAN node. The NG-RAN node includes at least one gNB and/or at least one ng-eNB. The gNB provides NR user plane and control plane protocol terminations towards the UE. The ng-eNB provides E-UTRA user plane and control plane protocol terminations towards the UE. The gNBs and ng-eNBs are interconnected with each other by means of the Xn interface. The gNBs and ng-eNBs are also connected by means of the NG interfaces to the 5G CN. More specifically, the gNBs and ng-eNBs are connected to the access and mobility management function (AMF) by means of the NG-C interface and to the user plane function (UPF) by means of the NG-U interface.

The gNB and/or ng-eNB host the following functions:
- Functions for radio resource management: Radio bearer control, radio admission control, connection mobility control, dynamic allocation of resources to UEs in both uplink and downlink (scheduling);
- Internet protocol (IP) header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or operations & maintenance (O&M));
- Measurement and measurement reporting configuration for mobility and scheduling;
- Transport level packet marking in the uplink;
- Session management;
- Support of network slicing;
- QoS flow management and mapping to data radio bearers;
- Support of UEs in RRC_INACTIVE state;
- Distribution function for non-assess stratum (NAS) messages;
- Radio access network sharing;
- Dual connectivity;
- Tight interworking between NR and E-UTRA.

The AMF hosts the following main functions:
- NAS signaling termination;
- NAS signaling security;
- AS security control;
- Inter CN node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing;
- Session management function (SMF) selection.

The UPF hosts the following main functions:
- Anchor point for Intra-/Inter-radio access technology (RAT) mobility (when applicable);
- External protocol data unit (PDU) session point of interconnect to data network;
- Packet routing & forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink traffic verification (service data flow (SDF) to QoS flow mapping);
- Downlink packet buffering and downlink data notification triggering.

The SMF hosts the following main functions:
- Session management;
- UE IP address allocation and management;
- Selection and control of UP function;
- Configures traffic steering at UPF to route traffic to proper destination;
- Control part of policy enforcement and QoS;
- Downlink data notification.

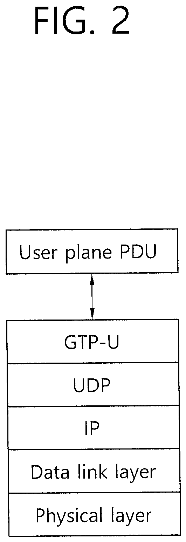

FIG. 2 shows a NG user plane protocol stack in a NR system. The NG-U which is the NG user plane interface is defined between the NG-RAN node and the UPF. Referring to the user plane protocol stack of the NG interface in FIG. 2, the transport network layer (TNL) is built on IP transport. The GPRS tunneling protocol user plane (GTP-U) is used on top of user datagram protocol (UDP)/IP to carry the user plane PDUs between the NG-RAN node and the UPF. NG-U provides non-guaranteed delivery of user plane PDUs between the NG-RAN node and the UPF.

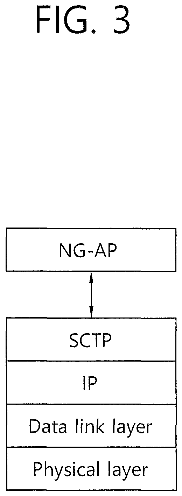

FIG. 3 shows a NG control plane protocol stack in a NR system. The NG-C which is the NG control plane interface is defined between the NG-RAN node and the AMF. Referring to the control plane protocol stack of the NG interface in FIG. 3, the TNL is built on IP transport. For the reliable transport of signaling messages, the stream control transmission protocol (SCTP) is added on top of IP. The application layer signaling protocol is referred to as NG application protocol (NGAP). The SCTP layer provides guaranteed delivery of application layer messages. In the transport, IP layer point-to-point transmission is used to deliver the signaling PDUs.

NG-C provides the following functions:
- NG interface management;
- UE context management;
- UE mobility management;
- Transport of NAS messages;
- Paging;
- PDU session management;
- Configuration transfer;
- Warning message transmission.

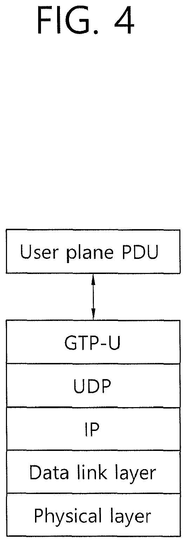

FIG. 4 shows an Xn user plane protocol stack in a NR system. The Xn-U which is the Xn user plane interface is defined between two NG-RAN nodes. Referring to the user plane protocol stack of the Xn interface in FIG. 4, the TNL is built on IP transport. The GTP-U layer is used on top of UDP/IP to carry the user plane PDUs between two NG-RAN nodes. Xn-U provides non-guaranteed delivery of user plane PDUs between two NG-RAN nodes and supports the following functions:
- Data forwarding;
- Flow control.

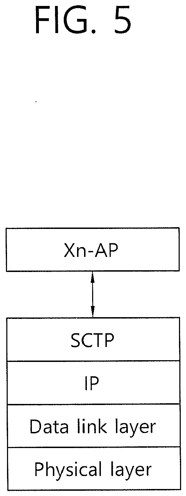

FIG. 5 shows an Xn control plane protocol stack in a NR system. The Xn-C which is the Xn control plane interface is defined between two NG-RAN nodes. Referring to the control plane protocol stack of the Xn interface in FIG. 5, the TNL is built on SCTP on top of IP layer. The application layer signaling protocol is referred to as Xn application protocol (XnAP). The SCTP layer provides the guaranteed delivery of application layer messages. In the transport IP layer point-to-point transmission is used to deliver the signaling PDUs.

The Xn-C interface supports the following functions:
- Xn interface management;
- UE mobility management, including context transfer and RAN paging:
- Dual connectivity.

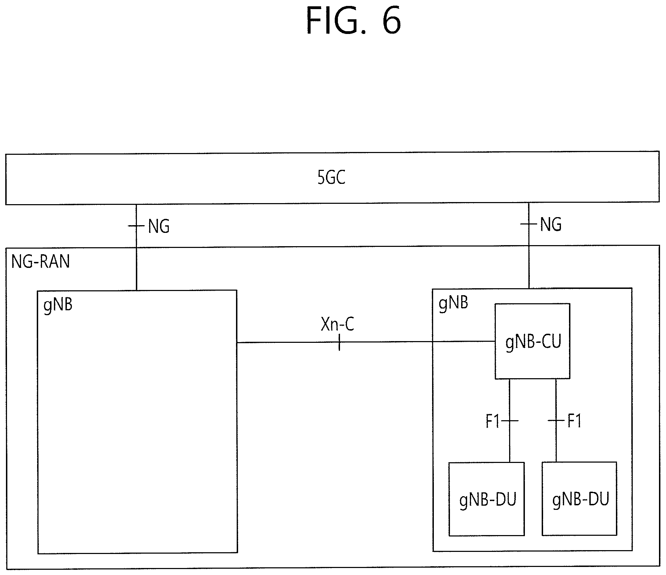

FIG. 6 shows an example of the overall architecture of an NG-RAN. Referring to FIG. 6, a gNB may include a gNB-central unit (CU) and at least one gNB-distributed unit (DU). The gNB-CU is a logical node that hosts a radio resource control (RRC) protocol, a service data adaptation protocol (SDAP) and a packet data convergence protocol (PDCP) of the gNB or an RRC protocol and a PDCP protocol of an en-gNB. The gNB-CU controls the operation of the at least one gNB-DU. The gNB-DU is a logical node that hosts radio link control (RLC), media access control (MAC), and physical layers of the gNB or the en-gNB. The operation of the gNB-DU is controlled in part by the gNB-CU. One gNB-DU supports one or more cells. One cell is supported by only one gNB-DU.

The gNB-CU and gNB-DU are connected via an F1 interface. The gNB-CU terminates the F1 interface connected to the gNB-DU. The gNB-DU terminates the F1 interface connected to the gNB-CU. One gNB-DU is connected to only one gNB-CU. However, the gNB-DU can be connected to a plurality gNB-CUs by suitable implementation. The F1 interface is a logical interface. In the NG-RAN, NG and Xn-C interfaces for a gNB including a gNB-CU and one or more gNB-DUs are terminated by the gNB-CU. In EN-DC, S1-U and X2-C interfaces for the gNB including the gNB-CU and one or more gNB-DUs are terminated by the gNB-CU. A gNB-CU and a gNB-DU connected thereto are seen only as a gNB by another gNB and 5GC.

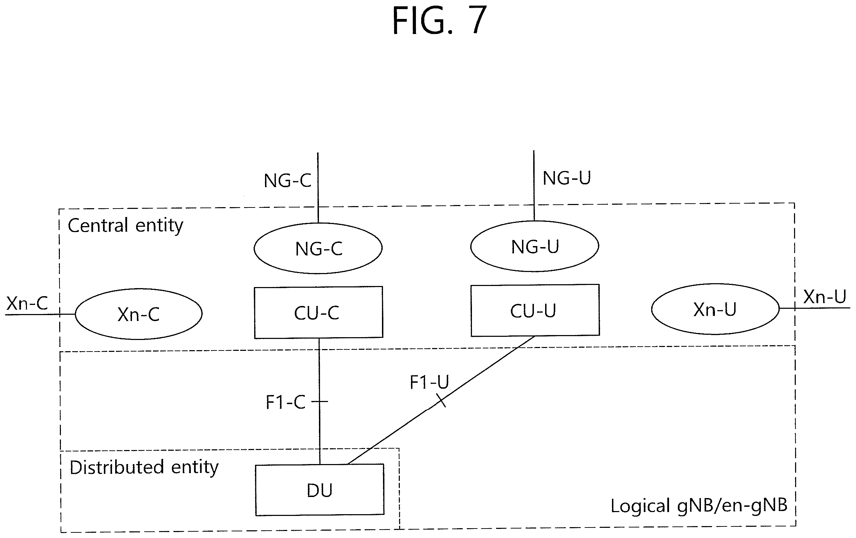

FIG. 7 shows logical nodes (CU-C, CU-U, and DU) in a logical gNB/en-gNB. FIG. 7 shows one possible deployment scenario for the NG-RAN shown in FIG. 6. The protocol termination of NG and Xn interfaces is indicated by an ellipse in FIG. 7. In FIG. 7, a central entity and a distributed entity represent physical network nodes.

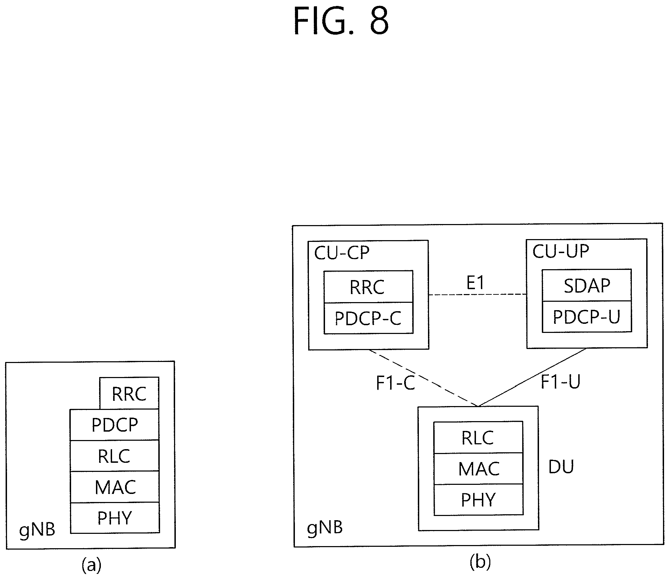

FIG. 8 shows a deployment scenario for a gNB. FIG. 8 shows an example of the architecture and the possible deployment scenario of the NG-RAN illustrated in FIGS. 6 and 7.

FIG. 8-(a) shows a collapsed gNB deployment scenario. In this deployment scenario, all RAN protocols and functions are in the same location. This deployment scenario corresponds to that currently used in LTE. This deployment scenario is similar to LTE architecture, thus ensuring maximum backward compatibility with the existing LTE deployment scenario.

FIG. 8-(b) shows a disaggregated deployment scenario. In this deployment scenario, RAN protocol functions are distributed across different locations, such as a CU and a DU. The DU hosts RLC, MAC, and physical layers. A CU-CP hosts RRC and PDCP-C protocols. A CU-UP hosts a PDCP-U (and SDAP) protocol. The DU and the CU-CP may be connected via an F1-C interface. The DU and the CU-UP may be connected via an F1-U interface. The CU-CP and the CU-UP may be connected via an E1 interface.

According to the disaggregated deployment scenario illustrated in (b) of FIG. 8, the RAN functions may be optimally deployed at different locations based on the scenario and desired performance. For example, the CU-CP may be located near the DU. Alternatively, the CU-CP may be deployed together with DU. In this case, a short latency time may be provided for an important CP procedure, such as connection (re)establishment, handover, and state transition. On the other hand, the CU-UP may be centralized in a regional or national data center. Thus, the CU-UP is advantageous for cloud implementation and may provide a centralized termination point for UP traffic in dual connectivity and tight interworking scenarios. Further, an additional CU-UP may be disposed close to (or co-located with) the DU to provide a local termination point of UP traffic for an application requiring a very low latency time (e.g. ultra-reliable low-latency communications (URLLC) traffic).

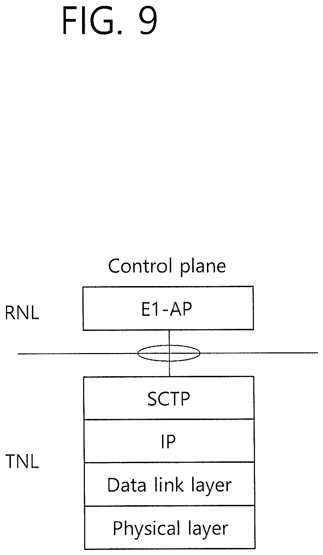

FIG. 9 shows the protocol structure of an E1 interface defined between a CU-CP and a CU-UP. A TNL is based on IP transmission and includes an SCTP layer above an IP layer. An application-layer signaling protocol is referred to as an E1 application protocol (E1AP).

According to the conventional art, user-plane data is encrypted by a PDCP between a UE and an eNB. An encryption function includes both ciphering and deciphering. On a user plane, a unit for encrypted data is a data portion of a PDCP protocol data unit (PDU). Encryption cannot be applied to a PDCP control PDU. An encryption algorithm and a security key used by the PDCP are configured by an RRC layer. The encryption function is activated/suspended/resumed by the RRC layer. When security is activated but is not suspended, the encryption function needs to be applied all PDCP PDUs indicated by the RRC layer for each of DL/UL.

Therefore, when the CU-CP and the CU-UP are separated in the NR, how to support security for the traffic of the CU-UP may be an issue. Specifically, for security for the traffic of the CU-UP, the PDCP layer needs to have a security key and an encryption algorithm. The PDCP layer may generate an encryption key for the user plane, K_{UPenc}, based on the security key and the encryption algorithm. However, since the PDCP layer is divided into a PDCP-C in the CU-CP and a PDCP-U in the CU-UP, it is necessary to determine which node to generate a security key, to select an encryption algorithm, and to generate K_{UPenc} for security for the traffic of the CU-UP among the CU-CP and the CU-UP. Further, it is necessary to determine signaling corresponding to the CU-UP.

### 1. Embodiment 1

Embodiment 1 of the present invention proposes an initial procedure for a CU-UP to support security of a data packet when a CU-CP and the CU-UP are separated. Hereinafter, specific embodiments of embodiment 1 of the present invention will be described.

### (1) Embodiment 1-1

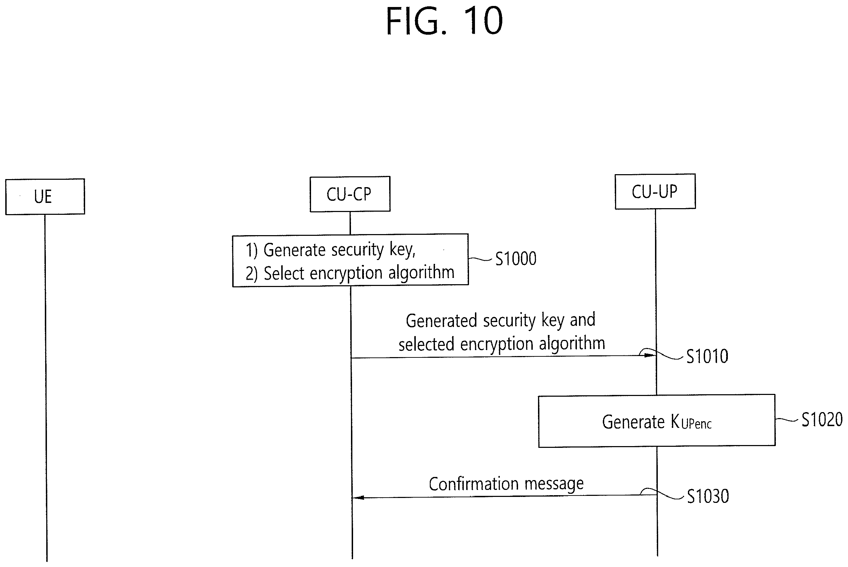

FIG. 10 illustrates a method for supporting security of the CU-UP according to embodiment 1-1 of the present invention. In embodiment 1-1, the CU-CP is responsible for generating a security key and selecting an encryption algorithm, and the CU-UP is responsible for generating K_{UPenc}.

In step S1000, the CU-CP generates a security key. The security key may be used only by the CU-UP for UP traffic. Alternatively, the security key may be commonly used by the CU-CP and the CU-UP for CP signaling and UP traffic. In addition, the CU-CP selects an encryption algorithm for a UE based on the security-related capability of the UE. The security-related capability of the UE may indicate all encryption algorithms supported by the UE. The encryption algorithm may be used only by the CU-UP for UP traffic. Alternatively, the encryption algorithm may be commonly used by the CU-CP and the CU-UP for CP signaling and UP traffic.

In step S1010, the CU-CP transmits the generated security key and the selected encryption algorithm to the CU-UP. The generated security key and the selected encryption algorithm may be transmitted through a UP setup procedure.

In step S1020, the CU-UP generates an encryption key K_{UPenc} for a user plane based on the generated security key and the selected encryption algorithm. Specifically, the CU-UP derives K_{UPenc} by inputting the generated security key and the selected encryption algorithm to a key derivation function (KDF). The generated/derived K_{UPenc} is used to protect UP traffic in the CU-UP.

In step S1030, the CU-UP transmits a confirmation message to the CU-CP. The confirmation message may be transmitted through a connection setup confirmation procedure.

### (2) Embodiment 1-2

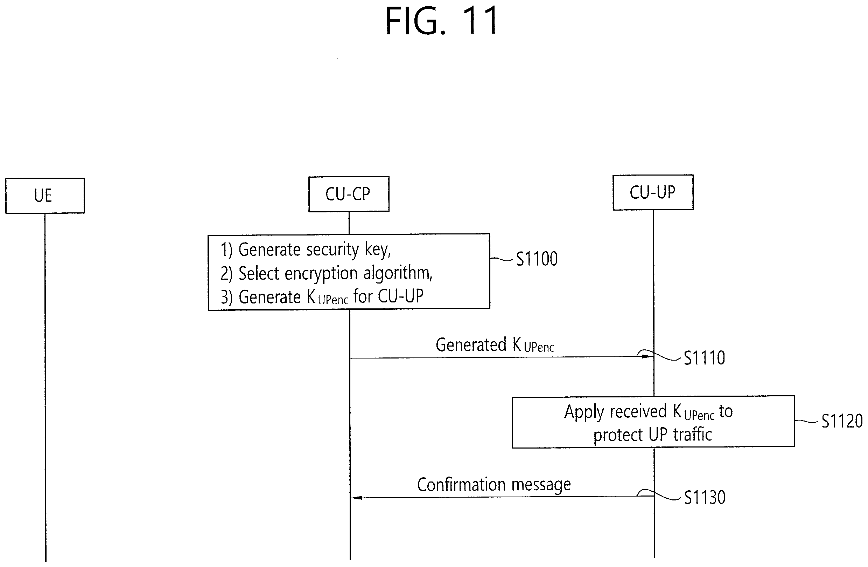

FIG. 11 illustrates a method for supporting security of the CU-UP according to embodiment 1-2 of the present invention. In embodiment 1-2, the CU-CP is entirely responsible for generating a security key, selecting an encryption algorithm, and generating K_{UPenc}.

In step S1100, the CU-CP generates a security key. The security key may be used only by the CU-UP for UP traffic. Alternatively, the security key may be commonly used by the CU-CP and the CU-UP for CP signaling and UP traffic. In addition, the CU-CP selects an encryption algorithm for a UE based on the security-related capability of the UE. The security-related capability of the UE may indicate all encryption algorithms supported by the UE. The encryption algorithm may be used only by the CU-UP for UP traffic. Alternatively, the encryption algorithm may be commonly used by the CU-CP and the CU-UP for CP signaling and UP traffic. Further, the CU-CP generates an encryption key K_{UPenc} for a user plane based on the generated security key and the selected encryption algorithm. Specifically, the CU-CP derives K_{UPenc} by inputting the generated security key and the selected encryption algorithm to a KDF. The generated/derived K_{UPenc} is used to protect UP traffic in the CU-UP.

In step S1110, the CU-CP transmits the generated/derived K_{UPenc} to the CU-UP. The generated/derived K_{UPenc} may be transmitted through a UP setup procedure.

In step S1120, the CU-UP applies the received K_{UPenc} to protect UP traffic.

In step S1130, the CU-UP transmits a confirmation message to the CU-CP. The confirmation message may be transmitted through a connection setup confirmation procedure.

### (3) Embodiment 1-3

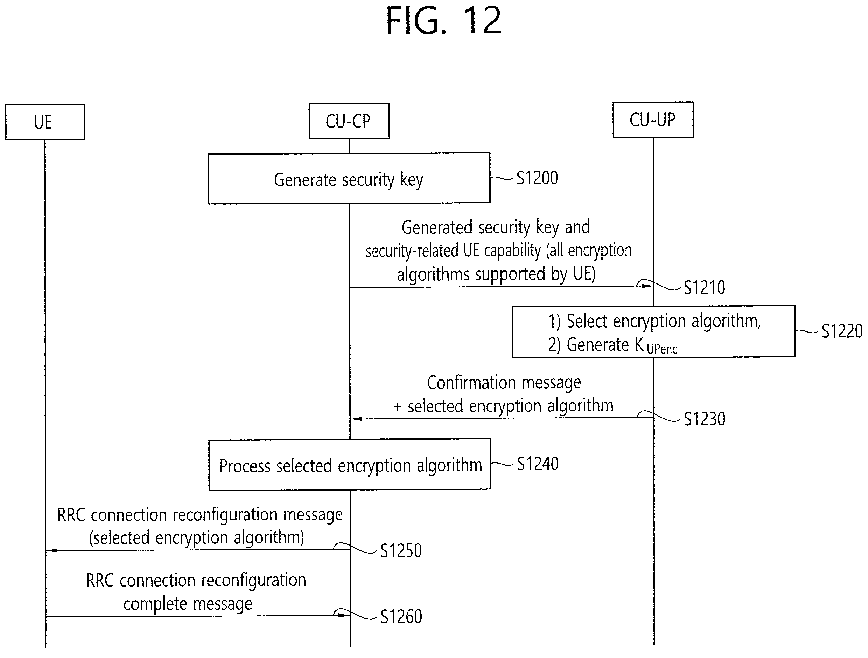

FIG. 12 illustrates a method for supporting security of the CU-UP according to embodiment 1-3 of the present invention. In embodiment 1-3, the CU-CP is responsible for generating a security key, and the CU-UP is responsible for selecting an encryption algorithm and generating K_{UPenc}.

In step S1200, the CU-CP generates a security key. The security key may be used only by the CU-UP for UP traffic. Alternatively, the security key may be commonly used by the CU-CP and the CU-UP for CP signaling and UP traffic.

In step S1210, the CU-CP transmits the generated security key and the security-related capability of a UE to the CU-UP. The generated security key and the security-related capability of the UE may be transmitted through a UP setup procedure. The security-related capability of the UE may indicate all encryption algorithms supported by the UE.

In step S1220, the CU-UP selects an encryption algorithm for the UE based on the received security-related capability of the UE. The encryption algorithm encryption algorithm may be used only by the CU-UP for UP traffic. Alternatively, the encryption algorithm may be commonly used by the CU-CP and the CU-UP for CP signaling and UP traffic. Further, the CU-UP generates an encryption key K_{UPenc} for a user plane based on the generated security key and the selected encryption algorithm. Specifically, the CU-UP derives K_{UPenc} by inputting the generated security key and the selected encryption algorithm to a KDF. The generated/derived K_{UPenc} is used to protect UP traffic in the CU-UP.

In step S1230, the CU-UP transmits a confirmation message including the selected encryption algorithm to the CU-CP. The confirmation message may be transmitted through a connection setup confirmation procedure.

In step S1240, the CU-CP processes the selected encryption algorithm received from the CU-UP. The CU-CP may determine whether to apply the same selected encryption algorithm in the CU-CP.

In operation S1250, the CU-CP transmits an RRC connection reconfiguration message including the selected encryption algorithm to the UE. In step S1260, the UE transmits an RRC connection reconfiguration complete message to the CU-CP in response to the RRC connection reconfiguration message.

According to embodiment 1 of the present invention, the CU-UP can process a data packet through security.

### 2. Embodiment 2

Embodiment 2 of the present invention proposes an update procedure for supporting security of a data packet in order to solve the problem of PDCP wrap-around that may occur in a CU-UP when a CU-CP and the CU-UP are separated. Specifically, a large quantity of data packets may be provided by the CU-UP, in which a PDCP count may wrap around in the CU-UP. Thus, a method of initiating a procedure for renewing/updating the security key of the CU-UP may be needed, because the CU-UP is a node that knows the actual condition of a data packet. In the conventional DC procedure, a secondary node (SN) triggers PDCP count wrap around through a secondary cell group (SCG) change instruction in an SN modification request message transmitted to a master node (MN).

Hereinafter, specific embodiments of embodiment 2 of the present invention will be described. The specific embodiments of embodiment 2 of the present invention can depend on the specific embodiment of embodiment 1 of the present invention described above.

### (1) Embodiment 2-1

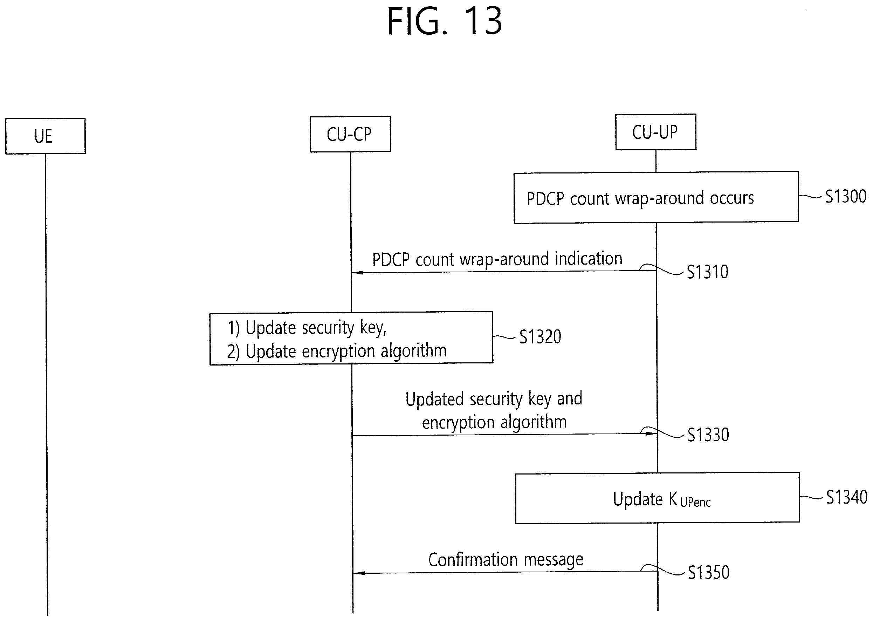

FIG. 13 illustrates a method of updating a security key when a PDCP count wraps around in the CU-UP according to embodiment 2-1 of the present invention. Similarly to in embodiment 1-1, in embodiment 2-1, the CU-CP is responsible for updating a security key and an encryption algorithm, and the CU-UP is responsible for updating K_{UPenc}.

In step S1300, the CU-UP detects that a DL or UL PDCP count is soon to wrap around.

In step S1310, the CU-UP transmits a PDCP count wrap-around indication to the CU-CP. The PDCP count wrap-around indication may be transmitted via a connection modification procedure.

In step S1320, the CU-CP updates a security key. The security key may be used only by the CU-UP for UP traffic. Alternatively, the security key may be commonly used by the CU-CP and the CU-UP for CP signaling and UP traffic. In addition, the CU-CP updates an encryption algorithm for a UE based on the security-related capability of the UE. The security-related capability of the UE may indicate all encryption algorithms supported by the UE. The encryption algorithm may be used only by the CU-UP for UP traffic. Alternatively, the encryption algorithm may be commonly used by the CU-CP and the CU-UP for CP signaling and UP traffic.

In step S1330, the CU-CP transmits the updated security key and the updated encryption algorithm to the CU-UP. The updated security key and the updated encryption algorithm may be transmitted through a UP modification procedure.

In step S1340, the CU-UP newly generates an encryption key K_{UPenc} for a user plane based on the updated security key and the updated encryption algorithm. Specifically, the CU-UP derives updated K_{UPenc} by inputting the updated security key and the updated encryption algorithm to a KDF. The updated K_{UPenc} is used to protect UP traffic in the CU-UP.

In step S1350, the CU-UP transmits a confirmation message to the CU-CP. The confirmation message may be transmitted through a connection modification confirmation procedure.

### (2) Embodiment 2-2

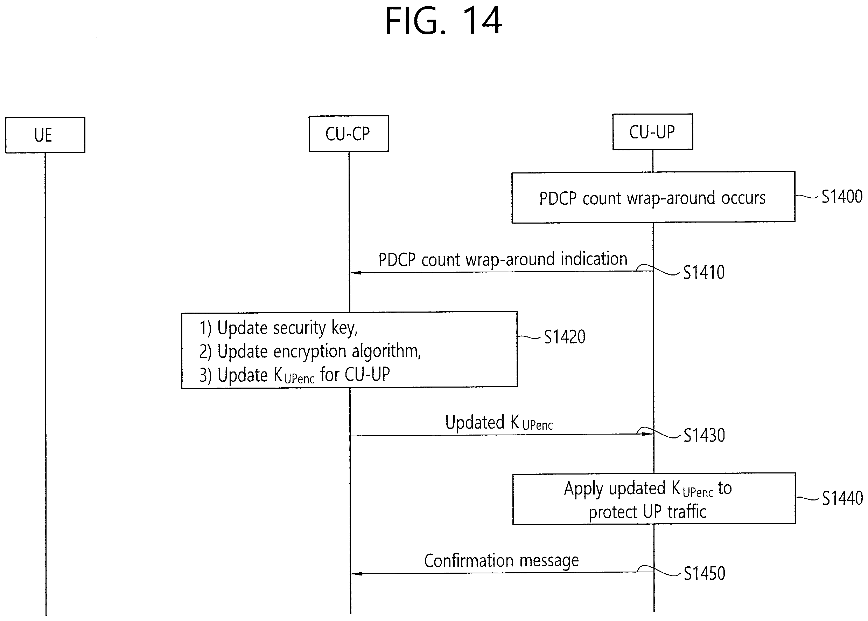

FIG. 14 illustrates a method of updating a security key when a PDCP count wraps around in the CU-UP according to embodiment 2-2 of the present invention. Similarly to in embodiment 1-2, in embodiment 2-2, the CU-CP is entirely responsible for updating a security key, an encryption algorithm, and K_{UPenc}.

In step S1400, the CU-UP detects that a DL or UL PDCP count is soon to wrap around.

In step S1410, the CU-UP transmits a PDCP count wrap-around indication to the CU-CP. The PDCP count wrap-around indication may be transmitted via a connection modification procedure.

In step S1420, the CU-CP updates a security key. The security key may be used only by the CU-UP for UP traffic. Alternatively, the security key may be commonly used by the CU-CP and the CU-UP for CP signaling and UP traffic. In addition, the CU-CP updates an encryption algorithm for a UE based on the security-related capability of the UE. The security-related capability of the UE may indicate all encryption algorithms supported by the UE. The encryption algorithm may be used only by the CU-UP for UP traffic. Alternatively, the encryption algorithm may be commonly used by the CU-CP and the CU-UP for CP signaling and UP traffic. Further, the CU-CP newly generates an encryption key K_{UPenc} for a user plane based on the updated security key and the updated encryption algorithm. Specifically, the CU-CP derives updated K_{UPenc} by inputting the updated security key and the updated encryption algorithm to a KDF. The updated K_{UPenc} is used to protect UP traffic in the CU-UP.

In step S1430, the CU-CP transmits the updated K_{UPenc} to the CU-UP. The updated K_{UPenc} may be transmitted through a UP modification procedure.

In step S1440, the CU-UP applies the received K_{UPenc} to protect UP traffic.

In step S1450, the CU-UP transmits a confirmation message to the CU-CP. The confirmation message may be transmitted through a connection modification confirmation procedure.

### (3) Embodiment 2-3

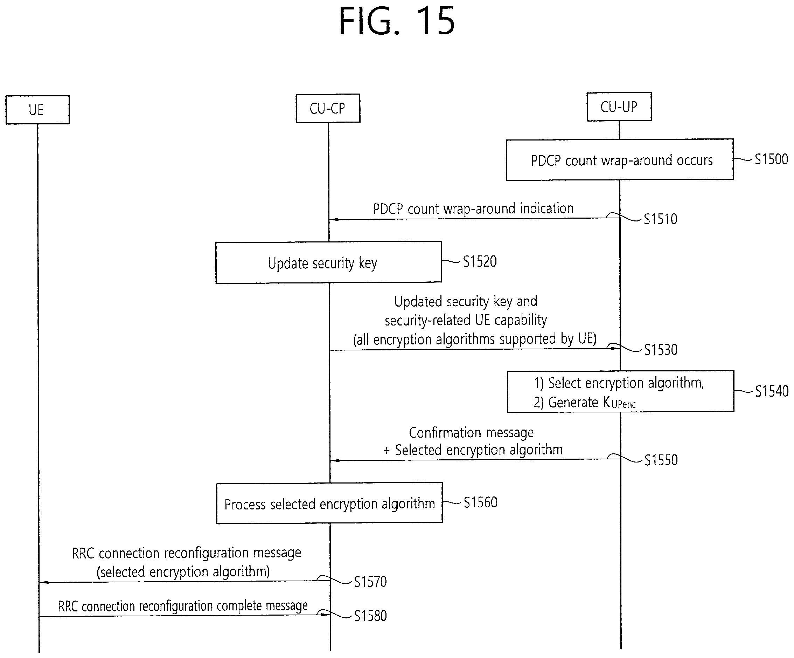

FIG. 15 illustrates a method of updating a security key when a PDCP count wraps around in the CU-UP according to embodiment 2-3 of the present invention. Similarly to in embodiment 1-3, in embodiment 2-3, the CU-CP is responsible for updating a security key, and the CU-UP is responsible for updating an encryption algorithm and K_{UPenc}.

In step S1500, the CU-UP detects that a DL or UL PDCP count is soon to wrap around.

In step S1510, the CU-UP transmits a PDCP count wrap-around indication to the CU-CP. The PDCP count wrap-around indication may be transmitted via a connection modification procedure.

In step S1520, the CU-CP updates a security key. The security key may be used only by the CU-UP for UP traffic. Alternatively, the security key may be commonly used by the CU-CP and the CU-UP for CP signaling and UP traffic.

In step S1530, the CU-CP transmits the updated security key and the security-related capability of a UE to the CU-UP. The updated security key and the security-related capability of the UE may be transmitted through a UP modification procedure. The security-related capability of the UE may indicate all encryption algorithms supported by the UE.

In step S1540, the CU-UP update an encryption algorithm for the UE based on the received security-related capability of the UE. The encryption algorithm encryption algorithm may be used only by the CU-UP for UP traffic. Alternatively, the encryption algorithm may be commonly used by the CU-CP and the CU-UP for CP signaling and UP traffic. Further, the CU-UP newly generates an encryption key K_{UPenc} for a user plane based on the updated security key and the updated encryption algorithm. Specifically, the CU-UP derives updated K_{UPenc} by inputting the updated security key and the updated encryption algorithm to a KDF. The updated K_{UPenc} is used to protect UP traffic in the CU-UP.

In step S1550, the CU-UP transmits a confirmation message including the updated encryption algorithm to the CU-CP. The confirmation message may be transmitted through a connection modification confirmation procedure.

In step S1560, the CU-CP processes the updated encryption algorithm received from the CU-UP. The CU-CP may determine whether to apply the same updated encryption algorithm in the CU-CP.

In step S1570, the CU-CP transmits an RRC connection reconfiguration message including the updated encryption algorithm to the UE. In step S1580, the UE transmits an RRC connection reconfiguration complete message to the CU-CP in response to the RRC connection reconfiguration message.

According to embodiment 2 of the present invention, the CU-UP can successively process data packets through updated security when a PDCP count wraps around in the CU-UP.

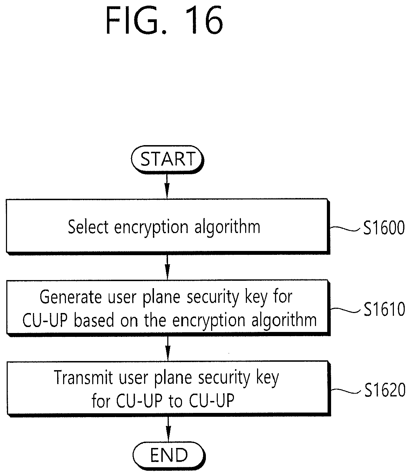

FIG. 16 illustrates a method in which a CU-CP of a gNB supports security of a CU-UP according to an embodiment of the present invention. The embodiment of FIG. 16 corresponds to embodiments 1-2 and 2-2 described above.

In step S1600, a CU-CP selects an encryption algorithm. The encryption algorithm may be selected based on the security-related capability of a UE. The security-related capability of the UE may be any encryption algorithm supported by the UE.

In step S1610, the CU-CP generates a user-plane security key for the CU-UP based on the encryption algorithm. The CU-CP may generate a security key. The user-plane security key for the CU-UP may be generated based on the security key and the encryption algorithm. The user-plane security key for the CU-UP may be derived by inputting the security key and the encryption algorithm to a KDF. The security key may be used only by the CU-UP or by the CU-UP and the CU-CP. The encryption algorithm may be used only by the CU-UP or by the CU-UP and the CU-CP.

In step S1620, the CU-CP transmits the user-plane security key for the CU-UP to the CU-UP.

Steps S1600 to S1620 may be performed in an initial bearer setup process. Accordingly, the user-plane security key may be transmitted to the CU-UP through a bearer context setup request message. The bearer context setup request message may be transmitted by the CU-CP to set up bearer context within the CU-UP.

Alternatively, the user-plane security key may be changed when triggered by the CU-CP or requested by the CU-UP. Accordingly, steps S1600 to S1620 may be performed in an initial bearer modification process, and the user-plane security key may be transmitted to the CU-UP through a bearer context modification request message. The bearer context modification request message may be transmitted by CU-CP to modify bearer context in the CU-UP. When the user-plane security key is transmitted through the bearer context modification request message, the CU-UP may replace a user-plane security key stored in the CU-UP with the received user-plane security key and may use the received user-plane security key for traffic protection.

When the user-plane security key is transmitted through the bearer context setup request message or the bearer context modification request message, the user-plane security key may be included in a security information IE. The security information IE provides information for configuring user plane encryption and/or integrity protection. Table 1 shows an example of the security information IE.

**[Table 1]**

| **IE/Group Name** | **Presence** | **Range** | **IE type and reference** | **Semantics description** |
|---|---|---|---|---|
| Security Algorithm | M | | 9.3.1.xx15 | |
| User Plane Security Keys | M | | 9.3.1.xx16 | |

Referring to Table 1, the security algorithm IE represents the selected encryption algorithm, and the user plane security key IE represents the generated/derived user-plane security key. The CU-CP may receive a PDCP count wrap-around indication from the CU-UP. Here, the CU-CP updates the encryption algorithm, updates the user-plane security key for the CU-UP based on the updated encryption algorithm, and transmits the updated user-plane security key for the CU-UP to the CU-UP. The CU-CP is a logical node constituting the gNB, which hosts RRC and PDCP-C protocols, and the CU-UP is a logical node constituting the gNB, which hosts a PDCP-U protocol. The CU-UP may host an SDAP protocol. The CU-CP and the CU-UP may be connected through an E1 interface.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method performed by a central unit (CU)-control plane (CP) of a gNB in a wireless communication system, the method comprising:
selecting (S1100) an encryption algorithm;
generating a user plane security key for a CU-user plane (CU-UP) of the gNB based on the encryption algorithm;
transmitting (S1110), to the CU-UP via E1 interface, the generated user plane security key during a User Plane, UP, setup procedure; and
receiving (S1130), from the CU-UP via the E1 interface, a response to confirm the setup of the UP,
wherein the CU-CP is a logical node constituting the gNB, that hosts a radio resource control (RRC) protocol and a packet data convergence protocol (PDCP)-C protocol, and
wherein the CU-UP is a logical node constituting the gNB, that hosts a PDCP-U protocol.

2. The method of claim 1, wherein the CU-CP and the CU-UP are connected via the E1 interface.

3. The method of claim 1, further comprising generating a security key.

4. The method of claim 3, wherein the user plane security key for the CU-UP is generated based on the security key.

5. The method of claim 4, wherein the user plane security key for the CU-UP is derived by using the security key and the encryption algorithm as inputs of a key derivation function (KDF) function.

6. The method of claim 3, wherein the security key is only used by the CU-UP or is used by the CU-UP and the CU-CP.

7. The method of claim 1, wherein the encryption algorithm is only used by the CU-UP for user plane traffic or is used by the CU-UP for user plane traffic and the CU-CP for control plane signaling.

8. The method of claim 1, wherein the encryption algorithm is selected based on a security related capability of a user equipment (UE).

9. The method of claim 8, wherein the security related capability of the UE is all encryption algorithms supported by the UE.

10. The method of claim 1, further comprising receiving (S1410) a PDCP count wrap-around indication from the CU-UP.

11. The method of claim 1, further comprising:
updating (S1420) the encryption algorithm;
updating the user plane security key for the CU-UP based on the updated encryption algorithm; and
transmitting (S1430) the updated user plane security key for the CU-UP to the CU-UP.

12. The method of claim 1, wherein the CU-UP hosts a service data adaptation protocol (SDAP) protocol.

13. A method performed by a central unit (CU)-user plane (UP) of a gNB in a wireless communication system, the method comprising:
receiving, from a CU-control plane (CP) of the gNB via E1 interface, a user plane security key for the CU-UP during a User Plane, UP, setup procedure;
applying the received user plane security key to the setup of the UP; and
transmitting, to the CU-CP of the gNB via the E1 interface, a response to confirm the setup of the UP,
wherein the CU-CP is a logical node constituting the gNB, that hosts a radio resource control (RRC) protocol and a packet data convergence protocol (PDCP)-C protocol, and
wherein the CU-UP is a logical node constituting the gNB, that hosts a PDCP-U protocol.

## Patentansprüche

1. Verfahren, das von einer Zentraleinheit (CU)-Steuerebene (CP) eines gNB in einem drahtlosen Kommunikationssystem durchgeführt wird, das Verfahren umfassend:
Auswählen (S1100) eines Verschlüsselungsalgorithmus;
Erzeugen eines Benutzerebenen-Sicherheitsschlüssels für eine CU-Benutzerebene (CU-UP) des gNB basierend auf dem Verschlüsselungsalgorithmus;
Übertragen (S1110), an die CU-UP über E1-Schnittstelle, des erzeugten Benutzerebenen-Sicherheitsschlüssels während einer Benutzerebenen-, UP-, Aufbauprozedur; und
Empfangen (S1130), von der CU-UP über die E1-Schnittstelle, einer Antwort zum Bestätigen des Aufbaus der UP,
wobei die CU-CP ein logischer Knoten ist, der den gNB darstellt, der ein Funkressourcensteuerungs- (RRC-) Protokoll und ein Paketdaten-Konvergenzprotokoll- (PDCP)-C-Protokoll beherbergt, und
wobei die CU-UP ein logischer Knoten ist, der den gNB darstellt, der ein PDCP-U-Protokoll beherbergt.

2. Verfahren nach Anspruch 1, wobei die CU-CP und die CU-UP über die E1-Schnittstelle verbunden sind.

3. Verfahren nach Anspruch 1, das ferner ein Erzeugen eines Sicherheitsschlüssels umfasst.

4. Verfahren nach Anspruch 3, wobei der Benutzerebenen-Sicherheitsschlüssel für die CU-UP basierend auf dem Sicherheitsschlüssel erzeugt wird.

5. Verfahren nach Anspruch 4, wobei der Benutzerebenen-Sicherheitsschlüssel für die CU-UP unter Verwendung des Sicherheitsschlüssels und des Verschlüsselungsalgorithmus als Eingaben einer Schlüsselableitungsfunktion (KDF) abgeleitet wird.

6. Verfahren nach Anspruch 3, wobei der Sicherheitsschlüssel nur von der CU-UP verwendet wird oder von der CU-UP und der CU-CP verwendet wird.

7. Verfahren nach Anspruch 1, wobei der Verschlüsselungsalgorithmus nur von der CU-UP für Benutzebenen-Verkehr verwendet wird oder von der CU-UP für Benutzebenen-Verkehr und der CU-CP für Steuerebenensignalisierung verwendet wird.

8. Verfahren nach Anspruch 1, wobei der Verschlüsselungsalgorithmus basierend auf einer sicherheitsbezogenen Fähigkeit eines Benutzergeräts (UE) ausgewählt wird.

9. Verfahren nach Anspruch 8, wobei die sicherheitsbezogene Fähigkeit des UE alle Verschlüsselungsalgorithmen ist, die von dem UE unterstützt werden.

10. Verfahren nach Anspruch 1, ferner umfassend Empfangen (S1410) einer PDCP-Zählumwicklungsanzeige von der CU-UP.

11. Verfahren nach Anspruch 1, ferner umfassend:
Aktualisieren (S1420) des Verschlüsselungsalgorithmus;
Aktualisieren des Benutzerebenen-Sicherheitsschlüssels für die CU-UP basierend auf dem aktualisierten Verschlüsselungsalgorithmus; und
Übertragen (S1430) des aktualisierten Benutzerebenen-Sicherheitsschlüssels für die CU-UP an die CU-UP.

12. Verfahren nach Anspruch 1, wobei die CU-UP ein Dienstdatenanpassungsprotokoll- (SDAP-) Protokoll beherbertgt.

13. Verfahren, das von einer Zentraleinheit (CU)-Benutzerebene (UP) eines gNB in einem drahtlosen Kommunikationssystem durchgeführt wird, das Verfahren umfassend:
Empfangen, von einer CU-Steuerebene (CP) des gNB über E1-Schnittstelle, eines Benutzerebenen-Sicherheitsschlüssels für die CU-UP während einer Benutzerebenen-, UP-, Aufbauprozedur;
Anwenden des empfangenen Benutzerebenen-Sicherheitsschlüssels auf den Aufbau der UP; und
Übertragen, an die CU-CP des gNB über die E1-Schnittstelle, einer Antwort zum Bestätigen des Aufbaus der UP,
wobei die CU-CP ein logischer Knoten ist, der den gNB darstellt, der ein Funkressourcensteuerungs- (RRC-) Protokoll und ein Paketdaten-Konvergenzprotokoll- (PDCP)-C-Protokoll beherbergt, und
wobei die CU-UP ein logischer Knoten ist, der den gNB darstellt, der ein PDCP-U-Protokoll beherbergt.

## Revendications

1. Procédé exécuté par un plan de commande (CP) d'unité centrale (CU) d'un gNB dans un système de communication sans fil, le procédé consistant à :
sélectionner (S1100) un algorithme de chiffrement ;
générer une clé de sécurité de plan utilisateur pour un plan utilisateur CU (CU-UP) du gNB en fonction de l'algorithme de chiffrement ;
transmettre (S1110), au CU-UP par l'intermédiaire de l'interface E1, la clé de sécurité de plan utilisateur générée pendant une procédure d'établissement de plan utilisateur, UP ; et
recevoir (S1130), en provenance du CU-UP par l'intermédiaire de l'interface E1, une réponse pour confirmer l'établissement du UP,
le CU-UP étant un nœud logique constitué du gNB qui héberge un protocole de gestion de ressources radio (RRC) et un protocole C de protocole de convergence de données en mode paquet (PDCP), et
le CU-UP étant un nœud logique constitué du gNB, qui héberge le protocole PDCP-U.

2. Procédé selon la revendication 1, le CU-UP et le CU-UP étant connectés par l'intermédiaire de l'interface E1.

3. Procédé selon la revendication 1, consistant en outre à générer une clé de sécurité.

4. Procédé selon la revendication 3, la clé de sécurité de plan utilisateur pour le CU-UP étant générée sur la base de la clé de sécurité.

5. Procédé selon la revendication 4, la clé de sécurité de plan utilisateur pour le CU-UP étant dérivé par l'utilisation de la clé de sécurité et l'algorithme de chiffrement en tant qu'entrées d'une fonction de dérivation de clé (KDF).

6. Procédé selon la revendication 3, la clé de sécurité étant uniquement utilisée par le CU-UP ou étant utilisée par le CU-UP et le CU-CP.

7. Procédé selon la revendication 1, l'algorithme de chiffrement étant uniquement utilisé par le CU-UP pour le trafic de plan utilisateur ou étant utilisé par le CU-UP pour le trafic de plan utilisateur et par le CU-CP la signalisation de plan de commande.

8. Procédé selon la revendication 1, l'algorithme de chiffrement étant sélectionné sur une capacité en termes de sécurité d'un équipement utilisateur (UE).

9. Procédé selon la revendication 8, la capacité en termes de sécurité de l'UE étant l'ensemble des algorithmes de chiffrement pris en charge par l'UE.

10. Procédé selon la revendication 1, consistant en outre à recevoir (S1410) une indication de compteur à débordement en provenance du CU-UP.

11. Procédé selon la revendication 1, consistant en outre à :
mettre à jour (S1420) l'algorithme de chiffrement ;
mettre à jour la clé de sécurité de plan utilisateur pour le CU-UP en fonction de l'algorithme de chiffrement mis à jour ; et
transmettre (S1430) la clé de sécurité de plan utilisateur mise à jour pour le CU-UP au CU-UP.

12. Procédé selon la revendication 1, le CU-UP hébergeant un protocole d'adaptation de données de service (SDAP).

13. Procédé exécuté par un plan utilisateur d'unité centrale (CU) d'un gNB dans un système de communication sans fil, le procédé consistant à :
recevoir, en provenance d'un plan de commande CU (CP) du gNB par l'intermédiaire de l'interface E1, une clé de sécurité de plan utilisateur pour le CU-UP pendant une procédure d'établissement de plan utilisateur, UP ;
appliquer la clé de sécurité de plan utilisateur reçue à l'établissement du UP ; et
transmettre, au CU-CP du gNB par l'intermédiaire de l'interface E1, une réponse pour confirmer l'établissement du UP,
le CU-UP étant un nœud logique constitué du gNB, qui héberge un protocole de gestion de ressources radio (RRC) et une protocole C de protocole de convergence de données en mode paquet (PDCP), et
le CU-UP étant un nœud logique constitué du gNB qui héberge un protocole PDCP-U.
